# FASCICULE DE BREVET EUROPEEN

(11) **EP 3 234 753 B1**
(45) Date de publication et mention de la délivrance du brevet: **28.04.2021**
(21) Numéro de dépôt: 15817208.0
(22) Date de dépôt: 16.12.2015
(51) Int. Cl.: G06F 3/0484

(54) **PROCÉDÉ DE PILOTAGE D'UN PARAMÈTRE DE FONCTIONNEMENT D'UNE INSTALLATION ACOUSTIQUE**
VERFAHREN ZUR STEUERUNG EINES BETRIEBSPARAMETERS EINER AKUSTISCHEN VORRICHTUNG
METHOD FOR CONTROLLING AN OPERATING PARAMETER OF AN ACOUSTIC APPARATUS

(30) Priorité: 16.12.2014 FR 1462519
(43) Date de publication de la demande: 25.10.2017
(73) Titulaire: Devialet, 75001 Paris (FR)
(72) Inventeur: COQUERET, Charles, 75012 Paris (FR); LEBLANC, Maxime, 94400 Vitry sur Seine (FR); CALMEL, Pierre-Emmanuel, 78150 Le Chesnay (FR)
(74) Mandataire: Lavoix
(86) Numéro de dépôt international: PCT/EP2015/080098
(87) Numéro de publication internationale: WO 2016/097058

(56) Documents cités:
- GB-A- 2 331 216
- US-A- 6 061 062

## Description

La présente invention concerne un procédé de pilotage d'un paramètre de fonctionnement d'une installation acoustique selon la revendication 1.

Le procédé convient en particulier pour piloter un paramètre de gain représentatif d'un volume sonore, l'installation acoustique étant par exemple un haut-parleur ou un amplificateur.

Pour modifier le volume sonore émis par un ordinateur personnel, il est connu, par exemple, d'afficher une fenêtre sur l'écran de l'ordinateur, la fenêtre comportant un curseur mobile par rapport à une échelle, graduée ou non, de la fenêtre. La position initiale du curseur par rapport à l'échelle représente le volume sonore de l'ordinateur. Pour modifier le volume sonore, un utilisateur, par exemple à l'aide d'une souris, clique sur le curseur et le déplace le long de l'échelle. La position finale du curseur par rapport à l'échelle fournit une valeur du volume sonore que l'ordinateur interprète comme un nouveau réglage. Le document US6061062A décrit un procédé similaire.

Le volume est ainsi réglable facilement entre une valeur minimale et une valeur maximale, par exemple entre 0 et 100.

Toutefois, il existe un risque que l'opérateur fasse passer le volume de 0 à 100 sans l'avoir réellement voulu. En d'autres termes, un tel procédé de pilotage du volume présente le désavantage que l'opérateur peut mettre l'installation acoustique à plein volume involontairement, avec toutes les conséquences négatives liées à un volume sonore trop important.

Un but de l'invention est donc de proposer un procédé de pilotage tel que décrit ci-dessus, à la fois pratique et limitant le risque que l'opérateur passe de la valeur minimale à la valeur maximale du paramètre de fonctionnement sans l'avoir voulu.

A cet effet, l'invention concerne un procédé de pilotage selon la revendication 1.

Selon des modes particuliers de réalisation, le procédé comprend l'une ou plusieurs des caractéristiques correspondant aux revendications 2 à 7, prise(s) isolément ou selon toutes les combinaisons techniquement possibles.

L'invention concerne aussi un système selon la revendication 8.

Selon un mode de réalisation particulier, le système comprend aussi les caractéristiques correspondant à la revendication 9.

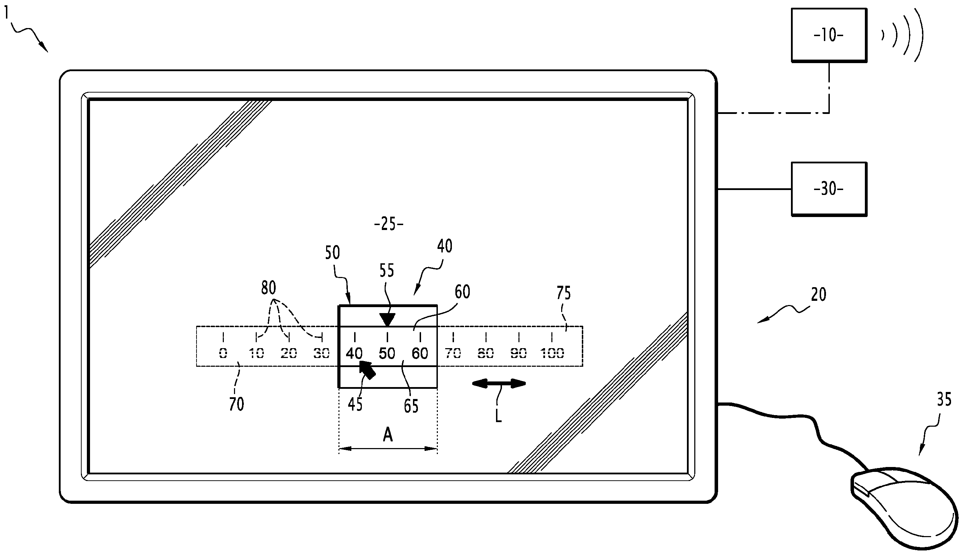

L'invention sera mieux comprise à la lecture de la description qui va suivre, donnée uniquement à titre d'exemple et faite en se référant à la figure annexée, laquelle est une représentation schématique d'un système selon l'invention.

En référence à la figure unique, on décrit un ensemble 1 d'une installation acoustique 10 et d'un système 20 pour piloter un paramètre de fonctionnement de l'installation acoustique 10.

L'installation acoustique 10 est par exemple un haut-parleur, un amplificateur, ou un ou plusieurs haut-parleurs connectés à un amplificateur.

En variante, l'installation acoustique 10 est un microphone.

Le paramètre de fonctionnement est avantageusement un paramètre de gain représentatif d'un volume sonore de l'installation acoustique 10. Le paramètre de fonctionnement prend des valeurs entre une valeur minimale, par exemple «0», et une valeur maximale, par exemple «100».

Selon le type d'installation acoustique 10, le paramètre de fonctionnement est susceptible de prendre toutes les valeurs comprises entre la valeur minimale et la valeur maximale, ou bien des valeurs discrètes. Dans ce dernier cas, les valeurs discrètes sont par exemple séparées par un pas constant caractéristique de l'installation acoustique 10.

Le système 20 comprend un écran 25, une unité centrale 30, et par exemple une souris 35.

Le système 20 est par exemple un ordinateur, avantageusement portable, une tablette tactile, ou un téléphone intelligent (en anglais *smartphone*).

L'écran 25 est adapté pour afficher une fenêtre 40, et un pointeur 45, par exemple en forme de flèche comme représenté sur la figure.

La fenêtre 40 comporte un bord 50, par exemple de forme rectangulaire, un repère 55 fixe par rapport au bord 50, et un curseur 60 propre à occuper une pluralité de positions (dont l'une est représentée sur la figure) par rapport au repère 55.

Le curseur 60 est mobile par rapport à la fenêtre 40 selon une direction de déplacement L avantageusement parallèle à l'écran 25. Les positions du curseur 60 sont respectivement représentatives d'une pluralité de valeurs du paramètre de fonctionnement de l'installation acoustique 10, par exemple, la position du curseur 60 représentée sur la figure est représentative de la valeur « 50 » du paramètre de fonctionnement.

Le curseur 60 comporte une partie 65 située à l'intérieur de la fenêtre 40, et deux parties 70, 75 situées à l'extérieur de la fenêtre dans la position du curseur représentée sur la figure. Dans d'autres positions du curseur 60 par rapport à la fenêtre 40 (non représentées), le curseur ne comporte qu'une seule partie située à l'extérieur de la fenêtre.

Dans l'exemple représenté, le curseur 60 est une réglette graduée allongée selon la direction de déplacement L.

Le curseur 60 comprend par exemple des graduations 80 régulièrement espacées selon la direction de déplacement L et allant de la valeur minimale à la valeur maximale, donc dans l'exemple de « 0 » à « 100 ».

De préférence, la ou les parties 70, 75 du curseur 60 située(s) à l'extérieur de la fenêtre 40 ne sont pas affichée(s) sur l'écran 25.

Selon un mode particulier de réalisation, les graduations 80 de la partie 65 qui sont éloignées du repère 55 selon la direction de déplacement L sont affichées de manière moins intense, ou floue, comparées aux graduations 80 plus proches du repère 55.

L'unité centrale 30 est connectée à l'écran 25. L'unité centrale 30 est adaptée pour contrôler ce qui est affiché à l'écran.

La souris 35 est connectée fonctionnellement à l'unité centrale 30. La souris 35 est adaptée pour déplacer le pointeur 45 à l'intérieur de la fenêtre 40.

La partie 65 du curseur 60 située à l'intérieur de la fenêtre 40 possède une amplitude A selon la direction de déplacement L. Dans l'exemple représenté, l'amplitude A s'étend environ de la graduation « 35 » à environ la graduation « 65 ». L'amplitude A est strictement inférieure au quotient de la différence entre la valeur maximale et la valeur minimale par trois.

Selon des variantes non représentées, l'amplitude A est strictement inférieure au quotient de la différence entre la valeur maximale et la valeur minimale par deux, quatre, ou cinq, ou encore par la valeur 1,5.

Le fonctionnement de l'ensemble 1 va maintenant être décrit.

En fonctionnement, le système 20 met en œuvre un procédé de pilotage du paramètre de fonctionnement de l'installation acoustique 10.

Le procédé comprend les étapes suivantes :
- mise en œuvre de l'écran 25,
- affichage du curseur 60 dans une position initiale (représentée sur la figure) par rapport au repère 55 de la fenêtre 40,
- acquisition d'une commande élémentaire réalisée par un opérateur (non représenté),
- déplacement du curseur 60 par rapport à la fenêtre 40, en fonction de la commande élémentaire acquise, d'une position initiale représentative d'une valeur initiale du paramètre de fonctionnement, à une position finale (non représentée) pour sélectionner une valeur finale du paramètre de fonctionnement dont la position finale est représentative, et
- transmission à l'installation acoustique 10 de la valeur finale sélectionnée.

Dans l'exemple représenté, la valeur initiale est indiquée par le repère 55 parmi les graduations 80 du curseur 60. Dans l'exemple, la valeur initiale du paramètre de fonctionnement est donc « 50 ».

En variante (non représentée), la valeur initiale pourrait être toute valeur comprise entre la valeur minimale et la valeur maximale.

En fonctionnement, l'unité centrale 30 assure que le curseur 60 n'aille pas au-delà de deux positions extrêmes (non représentées) représentatives respectivement de la valeur minimale et de la valeur maximale du paramètre de fonctionnement. Dit autrement, les déplacements du curseur 60 sont limités selon la direction de déplacement L pour que le repère 55 ne se trouve pas au-delà de la graduation « 100 » ou en-deçà de la graduation « 0 ».

Dans l'exemple représenté, la commande élémentaire consiste en un clic sur la souris 35 et un déplacement de la souris. Le clic permet de saisir le curseur 60 à l'aide du pointeur 45 et le déplacement de la souris 35 permet d'amorcer un déplacement du curseur 60 par rapport au repère 55 selon la direction de déplacement L.

En variante, le système 20 comprend un écran 25 de type tactile, le pointeur 45 est remplacé par un contact du doigt de l'opérateur avec l'écran, et le déplacement de la souris 35 est remplacé par un glissement du doigt sur l'écran.

Les déplacements possibles du curseur 60 en fonction de la commande élémentaire de l'opérateur déterminent une plage de valeurs sélectionnables pour le paramètre de fonctionnement.

Quelle que soit la commande élémentaire, le déplacement consécutif du curseur 60 est limité en amplitude selon la direction de déplacement L pour que la plage de valeurs sélectionnables soit limitée.

Selon un mode de réalisation, le déplacement du curseur 60 se fait à la même vitesse que le déplacement du pointeur 45 selon la direction de déplacement L tant que le pointeur 45 ne rencontre pas le bord 50 de la fenêtre 40.

Lorsque le pointeur 45 rencontre le bord 50, le déplacement du curseur 60 par rapport à la fenêtre 40 est interrompu. Ceci limite l'amplitude de la plage de valeurs sélectionnables.

Dans l'exemple représenté, toutes les valeurs du paramètre de fonctionnement correspondant aux graduations du curseur 60 contenues dans la fenêtre 40 sont sélectionnables.

La plage de valeurs sélectionnables possède, dans l'exemple, l'amplitude A représentée sur la figure. La plage de valeurs sélectionnables contient la valeur initiale (dans l'exemple « 50 ») et s'étend de part et d'autre jusqu'à la valeur « 65 » et jusqu'à la valeur « 35 ».

Le déplacement du curseur 60 obtenu par la commande élémentaire comprend, dans l'exemple représenté, une première phase dans laquelle le curseur se déplace à une vitesse sensiblement égale à la vitesse du pointeur par rapport à la direction de déplacement L. Si le pointeur 45 vient à rencontrer le bord 50 de la fenêtre 40, le déplacement du curseur 60 comprend une deuxième phase pendant laquelle la vitesse de déplacement du curseur 60 passe à zéro et reste nulle jusqu'à la transmission à l'installation acoustique 10 de la valeur finale sélectionnée par la position finale du curseur 60.

La deuxième phase suit immédiatement la première phase et correspond à une immobilisation, instantanée dans l'exemple, du curseur 60 par rapport à la fenêtre 40.

Selon d'autres modes de réalisation particuliers, le curseur 60 présente un profil de vitesse de déplacement par rapport à la direction de déplacement L différent de celui décrit ci-dessus.

Par exemple, durant la deuxième phase de déplacement du curseur 60, la vitesse du curseur décroît plus lentement, passant avantageusement à zéro en moins de 300 ms, de préférence en moins de 100 ms.

Par exemple, durant la première phase du déplacement du curseur 60, si la vitesse du pointeur 45 est strictement inférieure à un seuil prédéterminé, on déplace le curseur 60 à une vitesse strictement inférieure à celle du pointeur 45, de façon à obtenir un réglage plus fin de la valeur finale sélectionnée.

Le point commun de tous les modes de réalisation possibles de la première phase et de la deuxième phase de déplacement du curseur 60 en réponse à la commande élémentaire de l'opérateur est que la plage de positions finales atteignables par le curseur est limitée de telle manière que la plage de valeurs sélectionnables ait une amplitude strictement inférieure à la différence entre la valeur maximale et la valeur minimale.

Grâce aux caractéristiques décrites ci-dessus, si la valeur initiale du paramètre de fonctionnement est « 0 », la valeur finale étant contenue dans la plage de valeurs sélectionnables, la valeur finale est nécessairement strictement inférieure à la valeur maximale. Ainsi, il n'est pas possible que le paramètre de fonctionnement passe de la valeur minimale à la valeur maximale du fait de la commande élémentaire de l'opérateur. En termes plus simples, l'opérateur est obligé d'effectuer au moins deux, voire plus, commandes élémentaires pour passer de 0 à 100. Le nombre de commandes élémentaires à réaliser est d'autant plus élevé que la plage de valeurs sélectionnables est réduite par rapport à la différence entre la valeur maximale et la valeur minimale.

En outre, la caractéristique optionnelle selon laquelle le curseur 60 est déplacé à une vitesse inférieure à celle du pointeur 45 selon la direction de déplacement L si le pointeur 45 est déplacé lui-même à une vitesse inférieure à un seuil donné permet un réglage très fin du paramètre de fonctionnement.

Comme l'opérateur doit faire au moins deux gestes élémentaires pour passer de la valeur minimale à la valeur maximale, le risque est limité qu'il le fasse sans l'avoir voulu.

## Revendications

1. Procédé de pilotage d'un paramètre de fonctionnement d'une installation acoustique (10), le procédé comprenant au moins les étapes suivantes :
- mise en œuvre d'un écran (25) affichant au moins une fenêtre (40) comportant un curseur (60) propre à occuper une pluralité de positions par rapport à un repère (55) de la fenêtre (40), le curseur (60) étant mobile par rapport à la fenêtre (40) selon une direction de déplacement (L) parallèle à l'écran (25), les positions du curseur (60) étant respectivement représentatives d'une pluralité de valeurs du paramètre de fonctionnement s'étendant entre une valeur minimale et une valeur maximale,
- affichage du curseur (60) dans une position initiale par rapport au repère (55) représentative d'une valeur initiale du paramètre de fonctionnement,
- acquisition d'une commande élémentaire d'un opérateur,
- déplacement du curseur (60) par rapport au repère (55), en fonction de la commande élémentaire acquise, de la position initiale à une position finale pour sélectionner une valeur finale du paramètre de fonctionnement dans une plage de valeurs sélectionnables comprenant la valeur initiale, et
- transmission à l'installation acoustique (10) de la valeur finale sélectionnée,
la plage de valeurs sélectionnables ayant une amplitude strictement inférieure à la différence entre la valeur maximale et la valeur minimale,
**caractérisé en ce que** :
- l'acquisition de la commande élémentaire comprend une sous-étape de déplacement d'un pointeur (45) par l'opérateur dans la fenêtre (40), le déplacement du curseur (60) se faisant en fonction du déplacement du pointeur (45), et
- à la sous-étape de déplacement d'un pointeur (45), un paramètre de vitesse du pointeur (45) est obtenu, le paramètre de vitesse étant représentatif d'une vitesse du pointeur (45) en projection sur la direction de déplacement (L), le déplacement du curseur (60) comprenant au moins une première phase dans laquelle le curseur (60) est déplacé par rapport au repère (55) de la fenêtre (40) selon la direction de déplacement (L) à une vitesse sensiblement égale au paramètre de vitesse du pointeur (45) si le paramètre de vitesse est supérieure à un seuil prédéterminé, ou à une vitesse strictement inférieure au paramètre de vitesse si le paramètre de vitesse est inférieur ou égal au seuil prédéterminé.

2. Procédé selon la revendication 1, dans lequel la plage de valeurs sélectionnables a une amplitude strictement inférieure au quotient de la différence entre la valeur maximale et la valeur minimale par une valeur prise parmi 1,5, 2, 3, 4, et 5.

3. Procédé selon la revendication 1 ou 2, dans lequel le paramètre de fonctionnement est un paramètre de gain représentatif d'un volume sonore de l'installation acoustique (10).

4. Procédé selon l'une quelconque des revendications 1 à 3, dans lequel la commande élémentaire est un glissement du doigt sur un écran tactile, ou un clic et un déplacement de souris (35).

5. Procédé selon l'une quelconque des revendications 1 à 4, dans lequel le curseur (60) présente une forme allongée selon la direction de déplacement (L), le curseur (60) ayant, quelle que soit la position du curseur (60) par rapport au repère (55) prise dans ladite pluralité, une partie (65) située à l'intérieur de la fenêtre (40), et au moins une partie (70, 75) située à l'extérieur de la fenêtre (40) sur l'écran (25), la partie (70, 75) située à l'extérieur de la fenêtre (40) n'étant de préférence pas affichée sur l'écran (25).

6. Procédé selon la revendication 5, dans lequel le curseur (60) est une réglette graduée, comportant des graduations (80), de préférence régulièrement espacées, s'étendant de la valeur minimale à la valeur maximale, les graduations étant en partie situées dans la fenêtre (40), et les graduations (80) situées hors de la fenêtre (40) n'étant de préférence pas affichées.

7. Procédé selon l'une quelconque des revendications 1 à 6, dans lequel, à la sous-étape de déplacement du pointeur (45), on teste si le pointeur (45) rencontre un bord (50) de la fenêtre (40), et, si oui, à l'étape de déplacement du curseur (60), le déplacement du curseur (60) comprend une deuxième phase pendant laquelle la vitesse de déplacement du curseur (60) selon la direction de déplacement (L) passe à zéro et reste nulle jusqu'à la transmission à l'installation acoustique (10) de la valeur finale sélectionnée, la deuxième phase suivant immédiatement la première phase.

8. Système (20) pour piloter un paramètre de fonctionnement d'une installation acoustique (10), le système (20) comprenant un écran (25) adapté pour afficher au moins une fenêtre (40) comportant un curseur (60) propre à occuper une pluralité de positions par rapport à un repère (55) de la fenêtre (40), le curseur (60) étant mobile par rapport à la fenêtre (40) selon une direction de déplacement (L) parallèle à l'écran (25), les positions du curseur (60) étant respectivement représentatives d'une pluralité de valeurs du paramètre s'étendant entre une valeur minimale et une valeur maximale, le système (20) étant propre à :
- afficher le curseur (60) dans une position initiale par rapport au repère (55) représentative d'une valeur initiale du paramètre de fonctionnement,
- acquérir une commande élémentaire d'un opérateur par un déplacement d'un pointeur (45) par l'opérateur dans la fenêtre (40),
- déplacer le curseur (60) par rapport au repère (55) en fonction du déplacement du pointeur (45), de la position initiale à une position finale pour sélectionner une valeur finale du paramètre de fonctionnement dans une plage de valeurs sélectionnables comprenant la valeur initiale, et
- transmettre à l'installation acoustique (10) la valeur finale sélectionnée, le système (20) étant configuré pour que la plage de valeurs sélectionnables ait une amplitude strictement inférieure à la différence entre la valeur maximale et la valeur minimale, et
- pendant le déplacement du pointeur (45), obtenir un paramètre de vitesse du pointeur (45), le paramètre de vitesse étant représentatif d'une vitesse du pointeur (45) en projection sur la direction de déplacement (L), le déplacement du curseur (60) comprenant au moins une première phase dans laquelle le curseur (60) est déplacé par rapport au repère (55) de la fenêtre (40) selon la direction de déplacement (L) à une vitesse sensiblement égale au paramètre de vitesse du pointeur (45) si le paramètre de vitesse est supérieure à un seuil prédéterminé, ou à une vitesse strictement inférieure au paramètre de vitesse si le paramètre de vitesse est inférieur ou égal au seuil prédéterminé.

9. Système (20) selon la revendication 8, dans lequel le paramètre de fonctionnement est un paramètre de gain représentatif d'un volume sonore de l'installation acoustique (10).

## Patentansprüche

1. Verfahren zur Steuerung eines Betriebsparameters einer akustischen Einrichtung (10), wobei das Verfahren mindestens die folgenden Schritte aufweist:
- Umsetzen eines Bildschirms (25), welcher mindestens ein Fenster (40) anzeigt, das einen Cursor (60) aufweist, welcher dazu geeignet ist, eine Mehrzahl an Positionen bezüglich eines Bezugspunkts (55) des Fensters (40) einzunehmen, wobei der Cursor (60) bezüglich des Fensters (40) entlang einer Bewegungsrichtung (L) parallel zum Bildschirm (25) bewegbar ist, wobei die Positionen des Cursors (60) jeweilig für eine Mehrzahl von Werten des Betriebsparameters, welche sich zwischen einem minimalen Wert und einem maximalen Wert erstrecken, repräsentativ sind,
- Anzeigen des Cursors (60) in einer Anfangsposition bezüglich des Bezugspunkts (55), welche für einen Anfangswert des Betriebsparameters repräsentativ ist,
- Erlangen eines Elementarbefehls eines Bedieners,
- Bewegen des Cursors (60) bezüglich des Bezugspunkts (55) in Abhängigkeit von dem erlangten Elementarbefehl aus der Anfangsposition zu einer finalen Position zum Auswählen eines finalen Werts des Betriebsparameters in einem Bereich von auswählbaren Werten, welcher den Anfangswert aufweist, und
- Senden des ausgewählten finalen Werts an die akustische Einrichtung (10),
wobei der Bereich an auswählbaren Werten eine Amplitude aufweist, welche streng kleiner ist als die Differenz zwischen dem maximalen Wert und dem minimalen Wert,
**gekennzeichnet dadurch, dass**:
- das Erlangen des Elementarbefehls einen Unterschritt des Bewegens eines Zeigers (45) durch den Bediener in dem Fenster (40) aufweist, wobei die Bewegung des Cursors (60) in Abhängigkeit von der Bewegung des Zeigers (45) erfolgt, und
- bei dem Unterschritt des Bewegens eines Zeigers (45) ein Geschwindigkeitsparameter des Zeigers (45) erlangt wird, wobei der Geschwindigkeitsparameter für eine auf die Bewegungsrichtung (L) projizierte Geschwindigkeit des Zeigers (45) repräsentativ ist, wobei die Bewegung des Cursors (60) mindestens eine erste Phase aufweist, in welcher der Cursor (60) bezüglich des Bezugspunkts (55) des Fensters (40) entlang der Bewegungsrichtung (L) mit einer Geschwindigkeit, welche im Wesentlichen gleich dem Geschwindigkeitsparameter des Zeigers (45) ist, falls der Geschwindigkeitsparameter größer als ein vorbestimmter Schwellenwert ist, oder mit einer Geschwindigkeit, welche streng kleiner dem Geschwindigkeitsparameter ist, falls der Geschwindigkeitsparameter kleiner oder gleich dem vorbestimmten Schwellenwert ist, bewegt wird.

2. Verfahren gemäß dem Anspruch 1, wobei der Bereich von auswählbaren Werten eine Amplitude aufweist, welche streng kleiner einem Quotienten der Differenz zwischen dem maximalen Wert und dem minimalen Wert durch einen Wert, welcher aus 1,5, 2, 3, 4 und 5 ausgewählt ist, ist.

3. Verfahren gemäß dem Anspruch 1 oder 2, wobei der Betriebsparameter ein Verstärkungsparameter ist, welcher für eine Lautstärke der akustischen Einrichtung (10) repräsentativ ist.

4. Verfahren gemäß einem der Ansprüche 1 bis 3, wobei der Grundbefehl ein Gleiten eines Fingers auf einem berührungsempfindlichen Bildschirm oder ein Klicken und ein Ziehen einer Maus (35) ist.

5. Verfahren gemäß einem der Ansprüche 1 bis 4, wobei der Cursor (60) eine längliche Form entlang der Bewegungsrichtung (L) aufweist, wobei der Cursor (60), unabhängig von der Position des Cursors (60) bezüglich des Bezugspunkts in der besagten Mehrzahl, einen Abschnitt (65), welcher sich im Inneren des Fensters (40) befindet, und mindestens einen Abschnitt (70, 75), welcher sich außerhalb des Fensters (40) befindet, auf dem Bildschirm (25) aufweist, wobei der Abschnitt (70, 75), welcher sich außerhalb des Fensters (40) befindet, vorzugsweise nicht auf dem Bildschirm (25) angezeigt wird.

6. Verfahren gemäß dem Anspruch 5, wobei der Cursor (60) ein mit einer Skala versehener Streifen ist, welcher, vorzugsweise in regelmäßigem Abstand angeordnete, Skaleneinteilungen (80), welche sich zwischen dem minimalen Wert und dem maximalen Wert erstrecken, aufweist, wobei sich die Skaleneinteilungen teilweise in dem Fenster (40) befinden und wobei die außerhalb des Fensters (40) befindlichen Skaleneinteilungen (80) vorzugsweise nicht angezeigt werden.

7. Verfahren gemäß einem der Ansprüche 1 bis 6, wobei, in dem Unterschritt des Bewegens eines Zeigers (45), geprüft wird, ob der Zeiger (45) auf einen Rand (50) des Fensters (40) trifft, und, falls ja, dann in dem Schritt des Bewegens des Cursors (60) das Bewegen des Cursors (60) eine zweite Phase aufweist, während welcher die Bewegungsgeschwindigkeit des Cursors (60) entlang der Bewegungsrichtung (L) zu Null wird und Null bleibt, bis zum Senden des finalen ausgewählten Werts an die akustischen Einrichtung (10), wobei die zweite Phase unmittelbar auf die erste Phase folgt.

8. System (20) zur Steuerung eines Betriebsparameters einer akustischen Einrichtung (10), wobei das System (20) einen Bildschirm (25), welcher zum Anzeigen mindestens eines Fensters (40) eingerichtet ist, das einen Cursor (60) aufweist, welcher dazu geeignet ist, eine Mehrzahl an Positionen bezüglich eines Bezugspunkts (55) des Fensters (40) einzunehmen, wobei der Cursor (60) bezüglich des Fensters (40) entlang einer Bewegungsrichtung (L) parallel zum Bildschirm (25) bewegbar ist, wobei die Positionen des Cursors (60) jeweilig für eine Mehrzahl von Werten des Betriebsparameters, welche sich zwischen einem minimalen Wert und einem maximalen Wert erstrecken, repräsentativ sind, wobei das System (20) dazu geeignet ist:
- den Cursor (60) in einer Anfangsposition bezüglich des Bezugspunkts (55), welche für einen Anfangswert des Betriebsparameters repräsentativ ist, anzuzeigen,
- einen Elementarbefehl eines Bedieners für eine Bewegung eines Zeigers (45) durch den Bediener in dem Fenster (40) zu erlangen,
- den Cursor (60) bezüglich des Bezugspunkts (55) in Abhängigkeit von der Bewegung des Zeigers (45) aus der Anfangsposition zu einer finalen Position zu bewegen, um einen finalen Wert des Betriebsparameters in einem Bereich von auswählbaren Werten, welcher den Anfangswert aufweist, auszuwählen, und
- den ausgewählten finalen Wert an die akustische Einrichtung (10) zu senden, wobei das System so eingerichtet ist, dass der Bereich an auswählbaren Werten eine Amplitude aufweist, welche streng kleiner ist als die Differenz zwischen dem maximalen Wert und dem minimalen Wert, und
- während des Bewegens des Zeigers (45), einen Geschwindigkeitsparameter des Zeigers (45) zu erlangen, wobei der Geschwindigkeitsparameter für eine auf die Bewegungsrichtung (L) projizierte Geschwindigkeit des Zeigers (45) repräsentativ ist, wobei die Bewegung des Cursors (60) mindestens eine erste Phase aufweist, in welcher der Cursor (60) bezüglich des Bezugspunkts (55) des Fensters (40) entlang der Bewegungsrichtung (L) mit einer Geschwindigkeit, welche im Wesentlichen gleich dem Geschwindigkeitsparameter des Zeigers (45) ist, falls der Geschwindigkeitsparameter größer als ein vorbestimmter Schwellenwert ist, oder mit einer Geschwindigkeit, welche streng kleiner dem Geschwindigkeitsparameter ist, falls der Geschwindigkeitsparameter kleiner oder gleich dem vorbestimmten Schwellenwert ist, bewegt wird.

9. System (20) gemäß dem Anspruch 8, wobei der Betriebsparameter ein Verstärkungsparameter ist, welcher für eine Lautstärke der akustischen Einrichtung (10) repräsentativ ist.

## Claims

1. A method for controlling an operating parameter of an acoustic apparatus (10), the method comprising at least the following steps:
- implementing a screen (25) displaying at least one window (40) including a cursor (60) able to occupy a plurality of positions relative to a reference (55) of the window (40), the cursor (60) being movable relative to the window (40) in a movement direction (L) parallel to the screen (25), the positions of the cursor (60) respectively representing a plurality of values of the operating parameter extending between a minimal value and a maximal value,
- displaying the cursor (60) in an initial position relative to the reference (55) representative of an initial value of the operating parameter,
- acquiring an elementary command from an operator,
- moving the cursor (60) with respect to the reference (55), as a function of the acquired elementary command, from the initial position to a final position in order to select a final value of the operating parameter in a range of selected values containing the initial value, and
- sending of the selected final value to the acoustic apparatus (10),
the range of selectable values having an amplitude strictly less than the difference between the maximum value and the minimum value,
**characterized in that**:
- the acquisition of the elementary command comprises a sub-step for the movement of a pointer (45) by the operator in the window (40), the movement of the cursor (60) being done as a function of the movement of the pointer (45), and
- in the sub-step for movement of a pointer (45), a speed parameter of the pointer (45) is obtained, the speed parameter being representative of a speed of the pointer (45) projected over the movement direction (L), the movement of the cursor (60) comprising at least a first phase in which the cursor (60) is moved relative to the reference (55) of the window (40) in the movement direction (L) at a speed substantially equal to the speed parameter of the pointer (45) if the speed parameter is above a predetermined threshold, or at a speed strictly lower than the speed parameter if the speed parameter is less than or equal to the predetermined threshold.

2. The method according to claim 1, wherein the range of selectable values has an amplitude strictly less than the quotient of the difference between the maximum value and the minimum value by a value chosen from among 1.5, 2, 3, 4 and 5.

3. The method according to claim 1 or 2, wherein the operating parameter is a gain parameter representative of an audio volume of the acoustic apparatus (10).

4. The method according to any one of claims 1 to 3, wherein the elementary command is a sliding of the finger on a touchscreen, or a mouse click and movement (35).

5. The method according to any one of claims 1 to 4, wherein the cursor (60) has an elongate shape along the movement direction (L), the cursor (60) having, irrespective of the position of the cursor (60) relative to the reference (55) taken from said plurality, a part (65) situated inside the window (40), and at least one part (70, 75) situated outside the window (40) on the screen (25), the part (70, 75) situated outside the window (40) preferably not being displayed on the screen (25).

6. The method according to claim 5, wherein the cursor (60) is a graduated strip, including graduations (80), preferably regularly spaced apart, extending from the minimum value to the maximum value, the graduations being partially situated in the window (40), and the graduations (80) situated outside the window (40) preferably not being displayed.

7. The method according to any one of claims 1 to 6, wherein, in the sub-step for movement of the pointer (45), one tests whether the pointer (45) encounters an edge (50) of the window (40) and, if yes, in the step for movement of the cursor (60), the movement of the cursor (60) comprises a second phase during which the movement speed of the cursor (60) along the movement direction (L) goes to zero and remains zero until the selected final value is transmitted to the acoustic apparatus (10), the second phase immediately following the first phase.

8. A system (20) for controlling an operating parameter of an acoustic apparatus (10), the system (20) comprising a screen (25) suitable for displaying at least one window (40) including a cursor (60) able to occupy a plurality of positions relative to a reference (55) of the window (40), the cursor (60) being movable relative to the window (40) in a movement direction (L) parallel to the screen (25), the positions of the cursor (60) respectively representing a plurality of values of the parameter extending between a minimum value and a maximum value, the system (20) being able to:
- display the cursor (60) in an initial position relative to the reference (55) representative of an initial value of the operating parameter,
- acquire an elementary command from an operator by a movement of a pointer (45) by the operator in the window (40),
- move the cursor (60) with respect to the reference (55), as a function of the movement of the pointer (45), from the initial position to a final position in order to select a final value of the operating parameter in a range of selected values containing the initial value, and
- send the selected final value to the acoustic apparatus (10), the system (20) being configured so that the range of selectable values has an amplitude strictly less than the difference between the maximum value and the minimum value, and
- during the movement of the pointer (45), obtain a speed parameter of the pointer (45), the speed parameter being representative of a speed of the pointer (45) projected over the movement direction (L), the movement of the cursor (60) comprising at least a first phase in which the cursor (60) is moved relative to the reference (55) of the window (40) in the movement direction (L) at a speed substantially equal to the speed parameter of the pointer (45) if the speed parameter is above a predetermined threshold, or at a speed strictly lower than the speed parameter if the speed parameter is less than or equal to the predetermined threshold.

9. The system (20) according to claim 8, wherein the operating parameter is a gain parameter representative of an audio volume of the acoustic apparatus (10).
